# EUROPEAN PATENT SPECIFICATION

(11) **EP 2 129 701 B1**
(45) Date of publication and mention of the grant of the patent: **11.11.2020**
(21) Application number: 08718399.2
(22) Date of filing: 03.04.2008
(51) Int. Cl.: C08G 18/63, C08F 290/00, C08F 290/06, C08G 101/00, C08F 283/06

(54) **PROCESS FOR PREPARING POLYMER POLYOLS**
VERFAHREN ZUR HERSTELLUNG VON POLYMERPOLYOLEN
PROCÉDÉ POUR LA PRÉPARATION DE POLYOLS POLYMÈRES

(30) Priority: 04.04.2007 EP 07105659
(43) Date of publication of application: 09.12.2009
(73) Proprietor: Shell Internationale Research Maatschappij B.V., 2596 HR The Hague (NL)
(72) Inventor: BOUWMAN, Jeroen Patrick Michel, NL-3190 GB Hoogvliet (NL); FENNIS, Paulus Jacobus, NL-1031 CM Amsterdam (NL); DE RIDDER, Ronny, NL-3190 GB Hoogvliet (NL)
(74) Representative: Shell Legal Services IP
(86) International application number: PCT/EP2008/054048
(87) International publication number: WO 2008/122581

(56) References cited:
- EP-A- 1 762 578
- EP-A1- 0 698 628
- WO-A-00/59971
- WO-A1-99/40144

## Description

The present invention relates to a process for preparing polymer polyols.

Polymer polyols are commonly used for the manufacture of flexible polyurethane foams. Flexible polyurethane foams are widely used in numerous applications. Main sectors of application are automotive and aircraft industry, upholstered furniture and technical articles. For instance, full foam seats, top pads for the seats and restraints for back and head, all made from flexible polyurethane foam, are widely used in cars and aeroplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration.

A problem generally encountered in the manufacture of polymer polyols, i.e. a system wherein a polymer is stably dispersed in a base polyol, is to obtain a polymer polyol having both a relatively high solid polymer content and a sufficiently low viscosity for ease of handling.

EP-A-698628 discloses a semi-batch process for preparing polymer polyol by polymerization of styrene and acrylonitrile in a polyether polyol in a batch reactor in the presence of preformed polymer polyol (heel), wherein of from 0.25 to 3 %wt of the polymer solids in the final polymer polyol comes from the preformed polymer polyol.

EP-A-768324 discloses a continuous process for the preparation of highly stable, finely divided, low viscosity polymer polyols wherein in the first step an intermediate is prepared by reacting (1) a mixture of styrene and acrylonitrile in a mixture of (2) a polyoxyalkylene polyether polyol and (3) a macromer in the presence of (4) a free radical initiator, (5) a solvent having moderate chain transfer activity and optionally (6) a reaction moderator.

Further, WO 03/097712 discloses the use of both a seed and a heel in a batch or semi-batch process for preparing polymer polyols.

In order to effect polymerization of one or more ethylenically unsaturated monomers, in general, a polymerization initiator should be added and the temperature should be relatively high, preferably higher than ambient temperature. Polymerization temperatures may be comprised in the range of from 50 to 200°C. Therefore, in an initial phase, the temperature of a mixture of the starting materials for the polymerization or a portion thereof must be increased. Such phase is usually called start-up phase. Such start-up usually takes place in the absence of a polymerization initiator. During such start-up phase, the temperature may be increased up to the polymerization temperature.

In accordance with the prior art, the temperature increase during start-up is achieved by heating the starting materials inside the reactor wherein polymerization is to be performed. Such heating is generally performed by internally or externally heating, for example by heating the wall of the polymerization reactor with steam. A problem is that, in the course of time, fouling develops on the reactor wall. This fouling reduces the extent of heat transfer meaning that it becomes increasingly more difficult to attain a certain temperature within a certain time period. As a consequence, in the course of time, the start-up phase will take longer, unless fouling would be removed each time prior to starting a new batch. This removal of fouling is however cumbersome and time consuming. Further, if fouling would not be removed, it will become detached from the reactor wall some time and then end up in the final polymer polyol product. Removing the fouling from said final product, for example by filtering, is also cumbersome and time consuming.

It is an object of the present invention to reduce the fouling problem and the disadvantages connected therewith, as discussed above. Surprisingly, it was found that this object can be achieved by ensuring that one or more of the compounds to be mixed are fed while having a temperature which is higher than ambient temperature. Further advantages of the present invention are described below.

Accordingly, the present invention relates to a process for the batch or semi-batch preparation of a polymer polyol, which process comprises mixing a base polyol, one or more ethylenically unsaturated monomers, a polymerization initiator, optionally a macromer, and optionally a chain transfer agent, and polymerizing the mixture thus obtained at a temperature of 50 to 200°C, wherein one or more of the compounds to be mixed are fed while having a temperature which is higher than ambient temperature wherein the temperature which is higher than ambient temperature is achieved by pre-heating, wherein one or more of the compounds to be mixed are fed while having a temperature which is between 50 and 150% of the temperature (in °C) at which polymerization is carried out, wherein ambient temperature ranges from 0 to 45 °C, and wherein the one or more ethylenically unsaturated monomers are fed while having a temperature which equals ambient temperature.

Therefore, in accordance with the present invention, one or more of the base polyol, optional macromer and optional chain transfer agent to be mixed, have a temperature which is higher than ambient temperature at the time when they are fed to the present process. This implies that the temperature increase normally to be effected during a start-up phase may in fact be achieved, at least partially, prior to the present process, that is to say prior to mixing the starting materials. Therefore, besides solving the above-mentioned fouling problem, the present invention may result in that a start-up phase would no longer be required.

The relatively high temperature for one or more of the starting materials is achieved by pre-heating. Such pre-heating may suitably be effected by inserting a loop, containing a heater such as a heat exchanger, into the pipeline feeding one or more of the starting materials or compounds to the present process and sending said compound(s), at least partially, through such loop prior to mixing with the other compound(s).

A method of achieving the relatively high temperature for one or more of the starting materials, is to feed one or more of the starting materials or compounds to the present process directly after producing such compound(s) in a preceding process. In such case, pre-heating is needed to a less extent, because in a lot of instances the compound(s) to be fed are already heated because of any reaction heat generated in their production. For example, the base polyol may be sent directly to the present process after having prepared it while it is still hot. In such case, cooling of the hot polyol is not needed or is needed to a less extent. By doing this, no or less energy would be lost. Another advantage connected with such direct transfer to the present process, may be that less storage capacity is needed for the starting materials for the present process.

The compounds which are fed to the present process while having a temperature which is higher than ambient temperature, wherein said ambient temperature ranges from 0 to 45 °C, preferably have a temperature which is sufficiently high to reach a temperature for the mixture of all compounds at which polymerization may be initiated. Preferably, the latter temperature is comprised in the range of from 50 to 200 °C, more preferably 70 to 150 °C, and most preferably 90 to 120 °C. If such polymerization temperature can already be reached by feeding one or more of the starting compounds to the present process while having a temperature which is higher than ambient temperature, said starting materials would no longer have to be heated during the process itself, for example inside the reactor wherein polymerization is to be performed. The advantage of that is that a start-up phase effecting a temperature increase for the mixture of starting materials, may be omitted entirely. However, also where some heating would still be necessary after having added all the compounds, the present invention is still advantageous in that less heating is needed during the start-up phase, less fouling may be formed and the start-up phase is shorter. In all cases, a significant batch time reduction can be achieved whereby the overall capacity of a polymer polyol production plant is increased.

It is not necessary that all of the compounds to be mixed are fed to the present process while having a temperature which is higher than ambient temperature. For example, where the polymerization temperature is 100 °C, only the base polyol may be fed to the present process while having a temperature which is higher than ambient temperature. In such case, this temperature would have to be higher than 100 °C, for example 110 to 140°C, in order to compensate for the ambient temperature for the compounds other than the base polyol. If base polyol is pre-heated it may be pre-heated to a lower temperature, provided that one or more of the other compounds to be mixed are also pre-heated, for example the chain transfer agent, if present. However, the ethylenically unsaturated monomer(s) is or are fed to the present process while having a temperature which equals ambient temperature.

One or more of the compounds to be mixed are fed to the present process while having a temperature (in °C) which is between 50 and 150%, preferably between 75 and 150%, and more preferably between 90 and 130%, of the temperature (in °C) at which polymerization is carried out. The temperature at which polymerization is carried out is comprised in the range of from 50 to 200 °C, preferably 70 to 150 °C, and more preferably 90 to 120 °C. Suitably, the base polyol is fed to the present process while having a temperature (in °C) which is 110 to 140% of the temperature (in °C) at which polymerization is carried out, whereas the other compounds to be mixed are fed to the present process while having a temperature which equals ambient temperature.

As mentioned above, it is preferred that the present process does not comprise a start-up phase, that is to say a phase wherein a mixture of starting materials is further heated. However, where the present process does comprise such start-up phase, such phase preferably takes place in the absence of polymerization initiator.

In accordance with the present invention, additional base polyol and other additional compounds may be fed after initiation of the polymerization. Such additional amounts of the latter compound(s) need not be fed while having a temperature which is higher than ambient temperature, in order to maintain a constant polymerization temperature. Usually, reaction heat is generated in the polymerization reaction itself which heat may be removed by externally cooling the polymerization reactor. In a case where for example additional base polyol of ambient temperature is fed, such cooling may however be omitted, at least partially, for a certain period of time in order to maintain a constant polymerization temperature.

The pressure at which polymerization may be carried out in the present process, is suitably comprised in the range of from 0.01 to 5 bar absolute, more suitably 0.05 to 4 bar absolute.

The polyol used in the process according to the present invention preferably is a polyether polyol, also frequently referred to as polyoxyalkylene polyols. Such polyether polyols are typically obtained by reacting a starting compound having a plurality of active hydrogen atoms with one or more alkylene oxides, such as ethylene oxide, propylene oxide, butylene oxide or mixtures of two or more of these. Suitable polyether polyols are those having a nominal molecular weight in the range of from 350 to 15,000 and an average nominal functionality (Fn) of at least 2.0. It has been found particularly advantageous to use polyols having a molecular weight in the range of from 2000 to 14,000. Such polyols preferably further have a Fn in the range of from 2.5 to 6.0. The hydroxyl value of the polyol suitably has a value of from 10 to 150 mg KOH/g, more suitably of from 20 to 75 mg KOH/g. Examples of suitable polyols include CARADOL SC46-02, CARADOL SC36-13, CARADOL MC36-03, CARADOL SC56-02, CARADOL SC36-11, CARADOL SC48-03 and CARADOL MH56-03 (CARADOL is a trademark). Most preferably, CARADOL SC56-02 polyol and CARADOL SC48-03 polyol are used.

Suitable ethylenically unsaturated monomers for preparing the dispersed polymer include vinyl aromatic hydrocarbons, like styrene, alpha-methyl styrene, betamethyl styrene and various other alkyl-substituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred ethylenically unsaturated monomers to be used for the purpose of the present invention are styrene and acrylonitrile in a weight ratio of from 30:70 to 100:0. It is, however, particularly preferred to use styrene alone or a combination of styrene and acrylonitrile in a weight ratio styrene:acrylonitrile of from 50:50 to 75:25, resulting in the dispersed polymers polystyrene and styrene-acrylonitrile (SAN) copolymers, respectively.

Preferably, a macromer is fed to the present process. Within the present specification, a macromer is considered to be a polyol which may contain one or more unsaturations and which purpose is to effect a stable disperging of the polymer particles in the base polyol, said polymer particles obtained from polymerizing one or more ethylenically unsaturated monomers. Macromers which can be used include, but are not limited to the reaction product of a polyol with a reactive unsaturated compound such as maleic anhydride, phthalic anhydride, fumaric acid, 1,1-dimethyl-m-isopropenyl-benzyl-isocyanate, isocyanatoethylmethacrylate, 2-butene-1,4-diol, 1-butene-3,4-diol, hydroxyethylmethacrylate, hydroxypropyl acrylate, methyl methacrylate, acrylic and methacrylic acid, methacroyl chloride, glycidyl methacrylate and allyl glycidyl ether. If a polycarboxylic acid or anhydride is employed, it is preferred to react the unsaturated polyol with an alkylene oxide. The polyol for preparing the macromer preferably has a hydroxyl functionality of at least 2.

A preferred macromer has been described in WO-A-99/40144. Such macromer is suitable as a stabiliser precursor in a polymer polyol, and has been prepared by a process which comprises reacting a polyol with a cyclic dicarboxylic acid anhydride not containing any polymerizable double bond, and subsequently reacting the adduct thus obtained with an epoxide compound containing a polymerizable double bond. The polyol preferably is sorbitol or a mixture of sorbitol with one or more diols (including water), said sorbitol or said mixture having reacted with a mixture of propylene oxide and ethylene oxide. The cyclic dicarboxylic acid anhydride preferably is phthalic anhydride. The epoxide compound preferably is glycidyl methacrylate or glycidyl acrylate. The adduct can first partly be reacted with a di- or higher functional epoxide compound before being reacted with the epoxide compound containing a polymerizable double bond. Further, the polyol can be reacted with a di-or higher functional isocyanate compound preceding the reaction between the polyol and the cyclic dicarboxylic acid anhydride. A method for preparing the macromer comprises reacting the adduct first partly with the epoxide compound containing a polymerizable double bond and subsequently reacting the reaction product thus obtained with a di- or higher functional epoxide compound or a di-or higher functional isocyanate compound.

The macromer preferably has a nominal molecular weight of at least 4000, preferably in the range of from 5000 to 50,000.

The amount of ethylenically unsaturated monomers present during the process of the present invention can vary widely. At any time during the process according to the present invention, the amount of ethylenically unsaturated monomer will generally differ between of from 0 to 60% by weight based on total weight of base polyol, polymer, monomer(s) and optionally macromer. It is possible to have all base polyol fed initially, while it is also possible to add the majority of the base polyol after initiation of polymerization.

The additional base polyol optionally added after initiation of polymerization can be the same or can be different from the base polyol as initially fed. Preferably, the base polyol remains the same.

The polymerization initiator is usually applied in an amount of from 0.01 to 5% by weight based on total weight of monomers. Suitable polymerization initiators are known in the art and include both peroxide compounds and azo compounds. Examples of peroxides are dibenzoyl peroxide, lauroyl peroxide, t-butyl hydroperoxide, benzoyl peroxide and di-t-butyl peroxide. Examples of suitable azo compounds are azobis(isobutyronitrile) (AIBN) and azobis(2-methylbutyronitrile) (AMBN).

Chain transfer agents may also be added to or be present in the polymerization reaction medium. Preferably, they are fed to the reactor in the initial phase of the present process. The use of chain transfer agents and their nature is known in the art. Chain transfer agents enable a control of the molecular weight and/or the cross-linking occurring between the various polymer molecules and hence may affect stability of the polymer polyol. If used at all, a chain transfer agent is suitably used in an amount of from 0.1 to 20% by weight, more suitably 0.2 to 10% by weight, and most suitably 0.3 to 5% by weight, based on total weight of end product. Examples of suitable chain transfer agents are 1-butanol, 2-butanol, isopropanol, ethanol, methanol, cyclohexane and mercaptans, such as dodecanethiol, ethanethiol, 1-heptanethiol, 2-octanethiol and toluenethiol. Preferably, isopropanol is used as a chain transfer agent.

Other compounds, such as compounds facilitating mixing of the various components, compounds which have a viscosity-lowering effect and/or compounds which enable one or more of the components used to better dissolve in the reaction medium may also be applied. An example of a compound having a viscosity-lowering effect, thus enabling a better mixing of the components, is toluene. Auxiliaries like toluene can be present in the feed and/or in the reactor.

The various components used in the process to prepare polymer polyols in accordance with the present invention may be mixed together in different ways. This can be achieved batchwise or in a semi-batch operation. In the latter case one or more compounds are added to the reactor continuously for a limited amount of time. Such continuous addition may take place when adding the compounds to be mixed in an initial phase and/or when adding the compounds after such initial phase. Batch operation and semi-batch operation differ from continuous operation in that in batch and semi-batch operation the product is removed from the reactor discontinuously.

The present specification also discloses a polymer polyol, preferably a fouling-free polymer polyol, obtainable by the process of the present invention.

The polymer polyol obtainable by the process of the present invention is very suitable for the preparation of polyurethane foams, especially flexible polyurethane foams, by reacting it with a suitable polyisocyanate in the presence of one or more suitable polyurethane catalysts, a suitable blowing agent, one or more surfactants, and optionally a cross-linking agent. This reaction is also commonly denoted as foaming. Therefore, the present specification also discloses a process for preparing a polyurethane foam by foaming a composition comprising a polymer polyol obtainable by the process of the present invention and a polyisocyanate component.

Further, the present specification discloses a polyurethane foam obtainable by said foaming process. Still further, the present specification discloses a shaped article comprising said polyurethane foam.

Polyurethane catalysts are known in the art and include many different compounds. An extensive list of polyurethane catalysts is, for instance, given in U.S. patent specification No. 5,011,908. For the purpose of the present invention, suitable catalysts include tinbased catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine. Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polymer polyol (php). Preferred amounts of catalyst are from 0.05 to 1.0 php.

The use of cross-linking agents in the production of polyurethane foams is well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 3.0 php, but amounts in the range of from 0.2 to 1.5 php are most suitably applied.

Suitable blowing agents include water, acetone, (liquid) carbon dioxide, halogenated hydrocarbons, aliphatic alkanes and alicyclic alkanes. Due to the ozone depleting effect of the fully chlorinated, fluorinated alkanes (CFC's) the use of this type of blowing agents is generally not preferred, although it is possible to use them within the scope of the present invention. The halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known NCO/H₂O reaction, thereby releasing carbon dioxide which causes the blowing to occur. The aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e. between 0.1 to 5 php in case of water and between about 0.1 and 20 php in case of halogenated hydrocarbons, aliphatic alkanes and alicyclic alkanes.

In addition, other well known auxiliaries, such as flame retardants, foam stabilisers (surfactants) and fillers may also be used. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polymer polyol reactant and polyisocyanate reactant.

The invention is further illustrated in the following Examples.

In the Examples, the following compounds are used:
Base polyol = a polyether polyol containing randomly distributed ethyleneoxy and propyleneoxy monomers in the weight ratio of about 11/89. It is produced by using glycerol as the initiator and potassium hydroxide (KOH) as the catalyst. The base polyol has a weight average molecular weight of about 3,000 and has a OH value of about 54 mg KOH/g.

Styrene and acrylonitrile = ethylenically unsaturated monomers.

AMBN = azobis(2-methylbutyronitrile) (polymerization initiator).

Macromer = a polyol (in accordance with WO-A-99/40144) having the following structure: 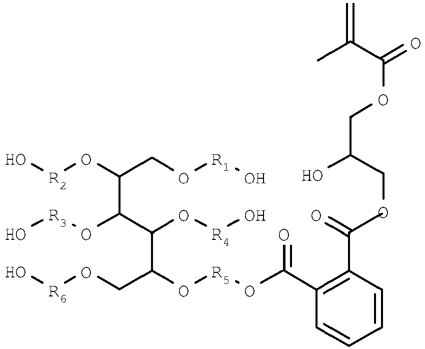 wherein R₁ to R₆ represent chains comprising randomly distributed propylene oxide (PO) and ethylene oxide (EO) monomers. The weight ratio of PO to EO in these chains is about 82/18. The weight average molecular weight per chain, averaged over all six chains, amounts to about 2,000.

IPA = isopropanol (chain transfer agent).

### Comparative Example 1

In the start-up phase, 182.5 g base polyol, 40.4 g macromer and 45.5 g IPA are fed, while having a temperature of 25 °C, to a reactor. The reactor is a stainless steel, continuously stirred tank reactor. Further, heating of the contents of the reactor to 100 °C takes place. This heating is attained by external heating, with steam, of the reactor wall.

In the main reaction phase, the remainder of the base polyol (296.3 g), styrene (295.7 g) and acrylonitrile (140.1 g) are fed to the reactor, while having a temperature of 25 °C. The polymerisation is started by feeding an 8 wt. solution of AMBN in the base polyol. 52.3 g of said AMBN solution is fed to the reactor, while having a temperature of 25 °C. The polymerization temperature within the reactor is maintained at 100°C.

### Example 1

The procedure of Comparative Example 1 is repeated, except that the base polyol, to be fed during the start-up phase, is first heated to 120 °C and then fed to the reactor while having a temperature of 120 °C.

During the start-up phase, advantageously less heating of the reactor wall than in Comparative Example 1 is needed in order to heat the contents of the reactor after having fed and mixed all of the compounds in the start-up phase, to 100 °C.

## Claims

1. Process for the batch or semi-batch preparation of a polymer polyol, which process comprises mixing a base polyol, one or more ethylenically unsaturated monomers, a polymerization initiator, optionally a macromer, and optionally a chain transfer agent, and polymerizing the mixture thus obtained at a temperature of 50 to 200°C, wherein one or more of the compounds to be mixed are fed while having a temperature which is higher than ambient temperature wherein the temperature which is higher than ambient temperature is achieved by pre-heating, wherein one or more of the compounds to be mixed are fed while having a temperature which is between 50 and 150% of the temperature (in °C) at which polymerization is carried out, wherein ambient temperature ranges from 0 to 45 °C, and wherein the one or more ethylenically unsaturated monomers are fed while having a temperature which equals ambient temperature.

2. Process according to claim 1, wherein one or more of the compounds to be mixed are fed while having a temperature which is between 75 and 150%, preferably between 90 and 130%, of the temperature (in °C) at which polymerization is carried out.

3. Process according to claim 1 or 2, wherein the temperature at which polymerization is carried out is comprised in the range of from 70 to 150 °C, preferably 90 to 120 °C.

4. Process according to any one of the preceding claims, wherein the base polyol is fed while having a temperature which is 110 to 140% of the temperature (in °C) at which polymerization is carried out, whereas the other compounds to be mixed are fed while having a temperature which equals ambient temperature.

5. Process according to any one of the preceding claims, wherein the base polyol has a nominal molecular weight in the range of from 350 to 15,000 and an average nominal functionality (Fn) of at least 2.0.

6. Process according to any one of the preceding claims, wherein the ethylenically unsaturated monomers are styrene and acrylonitrile in a weight ratio of from 30:70 to 100:0.

7. Process according to any one of the preceding claims, wherein a macromer is used and the macromer is obtained by reacting a polyol with a cyclic dicarboxylic acid anhydride not containing any polymerizable double bond, and subsequently reacting the adduct thus obtained with an epoxide compound containing a polymerizable double bond.

8. Process according to claim 7, wherein the cyclic dicarboxylic acid anhydride is phthalic anhydride.

## Patentansprüche

1. Verfahren für die chargenweise oder halbchargenweise Herstellung eines Polymerpolyols, wobei das Verfahren ein Mischen eines Basispolyols, eines oder mehrerer ethylenisch ungesättigter Monomere, eines Polymerisationsinitiators, optional eines Makromers und optional eines Kettenübertragungsmittels und ein Polymerisieren der so erhaltenen Mischung bei einer Temperatur von 50 bis 200 °C umfasst, wobei eine oder mehrere der zu mischenden Verbindungen zugeführt werden, während sie eine Temperatur aufweisen, die höher als die Umgebungstemperatur ist, wobei die Temperatur, die höher als die Umgebungstemperatur ist, durch Vorwärmen erreicht wird, wobei eine oder mehrere der zu mischenden Verbindungen zugeführt werden, während sie eine Temperatur aufweisen, die zwischen 50 und 150 % der Temperatur (in °C) liegt, bei der die Polymerisation durchgeführt wird, wobei die Umgebungstemperatur von 0 bis 45 °C reicht, und wobei das eine oder die mehreren ethylenisch ungesättigten Monomere zugeführt werden, während sie eine Temperatur aufweisen, die gleich der Umgebungstemperatur ist.

2. Verfahren nach Anspruch 1, wobei eine oder mehrere der zu mischenden Verbindungen zugeführt werden, während sie eine Temperatur aufweisen, die zwischen 75 und 150 %, vorzugsweise zwischen 90 und 130 %, der Temperatur (in °C) beträgt, bei der die Polymerisation durchgeführt wird.

3. Verfahren nach Anspruch 1 oder 2, wobei die Temperatur, bei der die Polymerisation durchgeführt wird, in dem Bereich von 70 bis 150 °C, vorzugsweise 90 bis 120 °C, umfasst ist.

4. Verfahren nach einem der vorhergehenden Ansprüche, wobei das Basispolyol zugeführt wird, während es eine Temperatur aufweist, die 110 bis 140 % der Temperatur (in °C) beträgt, bei der die Polymerisation durchgeführt wird, während die anderen zu mischenden Verbindungen zugeführt werden, während sie eine Temperatur aufweisen, die gleich der Umgebungstemperatur ist.

5. Verfahren nach einem der vorhergehenden Ansprüche, wobei das Basispolyol ein nominales Molekulargewicht in dem Bereich von 350 bis 15.000 und eine durchschnittliche nominale Funktionalität (Fn) von mindestens 2,0 aufweist.

6. Verfahren nach einem der vorhergehenden Ansprüche, wobei die ethylenisch ungesättigten Monomere Styrol und Acrylnitril in einem Gewichtsverhältnis von 30:70 bis 100:0 sind.

7. Verfahren nach einem der vorhergehenden Ansprüche, wobei ein Makromer verwendet wird und das Makromer durch Umsetzen eines Polyols mit einem cyclischen Dicarbonsäureanhydrid, das keine polymerisierbare Doppelbindung enthält, und durch anschließendes Umsetzen des so erhaltenen Addukts mit einer Epoxidverbindung, die eine polymerisierbare Doppelbindung enthält, erhalten wird.

8. Verfahren nach Anspruch 7, wobei das cyclische Dicarbonsäureanhydrid Phthalsäureanhydrid ist.

## Revendications

1. Procédé de préparation discontinue ou semi-discontinue d'un polyol polymère, lequel procédé comprend le mélange d'un polyol de base, d'un ou plusieurs monomères éthyléniquement insaturés, d'un initiateur de polymérisation, éventuellement d'un macromère, et éventuellement d'un agent de transfert de chaîne, et la polymérisation du mélange ainsi obtenu à une température de 50 à 200 °C, un ou plusieurs des composés à mélanger étant introduits alors qu'ils sont à une température qui est supérieure à la température ambiante, la température qui est supérieure à la température ambiante étant obtenue par préchauffage, un ou plusieurs des composés à mélanger étant introduits alors qu'ils sont à une température comprise entre 50 et 150 % de la température (en °C) à laquelle la polymérisation est effectuée, la température ambiante étant comprise entre 0 et 45 °C, et le ou les monomères éthyléniquement insaturés étant introduits alors qu'ils sont à une température qui est égale à la température ambiante.

2. Procédé selon la revendication 1, dans lequel un ou plusieurs des composés à mélanger sont introduits alors qu'ils sont à une température comprise entre 75 et 150 %, de préférence entre 90 et 130 %, de la température (en °C) à laquelle la polymérisation est effectuée.

3. Procédé selon la revendication 1 ou 2, dans lequel la température à laquelle la polymérisation est effectuée est comprise dans la plage de 70 à 150 °C, de préférence de 90 à 120 °C.

4. Procédé selon l'une quelconque des revendications précédentes, dans lequel le polyol de base est introduit alors qu'il est à une température qui est de 110 à 140 % de la température (en °C) à laquelle la polymérisation est effectuée, tandis que les autres composés à mélanger sont introduits alors qu'ils sont à une température égale à la température ambiante.

5. Procédé selon l'une quelconque des revendications précédentes, dans lequel le polyol de base a un poids moléculaire nominal dans la plage de 350 à 15 000 et une fonctionnalité nominale (Fn) moyenne d'au moins 2,0.

6. Procédé selon l'une quelconque des revendications précédentes, dans lequel les monomères éthyléniquement insaturés sont le styrène et l'acrylonitrile dans un rapport en poids de 30:70 à 100:0.

7. Procédé selon l'une quelconque des revendications précédentes, dans lequel un macromère est utilisé et le macromère est obtenu en faisant réagir un polyol avec un anhydride d'acide dicarboxylique cyclique ne contenant pas de double liaison polymérisable, puis en faisant réagir le produit d'addition ainsi obtenu avec un composé époxyde contenant une double liaison polymérisable.

8. Procédé selon la revendication 7, dans lequel l'anhydride d'acide dicarboxylique cyclique est l'anhydride phtalique.
